# EUROPÄISCHE PATENTSCHRIFT

(11) **EP 2 553 312 B1**
(45) Veröffentlichungstag und Bekanntmachung des Hinweises auf die Patenterteilung: **24.09.2014**
(21) Anmeldenummer: 11711870.3
(22) Anmeldetag: 29.03.2011
(51) Int. Cl.: F16P 3/14, B21D 55/00, B30B 15/28, G01V 8/10

(54) **SICHERHEITSEINRICHTUNG FÜR EINE MASCHINE, BEI DER EIN ERSTES MASCHINENTEIL EINE ARBEITSBEWEGUNG GEGEN EIN ZWEITES MASCHINENTEIL AUSFÜHRT**
SAFETY DEVICE FOR A MACHINE IN WHICH A FIRST MACHINE PART PERFORMS A WORKING MOVEMENT WITH RESPECT TO A SECOND MACHINE PART
DISPOSITIF DE SÉCURITÉ POUR UNE MACHINE DANS LAQUELLE UNE PREMIÈRE PARTIE DE MACHINE EFFECTUE UN MOUVEMENT DE TRAVAIL PAR RAPPORT À UNE DEUXIÈME PARTIE DE MACHINE

(30) Priorität: 29.03.2010 DE 202010004438 U
(43) Veröffentlichungstag der Anmeldung: 06.02.2013
(73) Patentinhaber: Pilz GmbH & Co. KG, 73760 Ostfildern (DE)
(72) Erfinder: HUFNAGEL, Mark, 73760 Ostfildern (DE); LEIBFARTH, Roland, 73760 Ostfildern (DE)
(74) Vertreter: Witte, Weller & Partner Patentanwälte mbB
(86) Internationale Anmeldenummer: PCT/EP2011/054861
(87) Internationale Veröffentlichungsnummer: WO 2011/120990

(56) Entgegenhaltungen:
- EP-A2- 1 319 886
- WO-A1-2006/135961

## Beschreibung

Die vorliegende Erfindung betrifft eine Sicherheitseinrichtung für eine Maschine, bei der ein erstes Maschinenteil eine Arbeitsbewegung gegen ein zweites Maschinenteil ausführt, wobei das erste Maschinenteil eine in Bewegungsrichtung vorlaufende Kante besitzt, die eine Bewegungsebene definiert, mit einer Vielzahl von optischen Sicherheitsschranken und einer Auswerteeinheit, wobei sich die optischen Sicherheitsschranken in der Arbeitsbewegung mit dem ersten Maschinenteil derart mitbewegen, dass sie der Kante mit unterschiedlichen Abständen vorauslaufen, wobei die optischen Sicherheitsschranken ein im Querschnitt zweidimensionales Schutzfeld aufspannen, und wobei die Auswerteeinheit dazu ausgebildet ist, ein Stoppsignal zum Anhalten des ersten Maschinenteils in Abhängigkeit von den optischen Sicherheitsschranken zu erzeugen.

Eine solche Sicherheitseinrichtung ist beispielsweise aus DE 202 17 426 U1 bekannt.

Ein bekanntes Verfahren zur spanlosen Bearbeitung von Werkstücken ist das Biegen oder Abkanten. Dabei wird ein im Bereich der Bearbeitungsstelle zunächst noch flaches Werkstück unter Druck umgeformt. Bei der maschinellen Bearbeitung werden hierzu Maschinen verwendet, die nachfolgend allgemein als Biegepressen bezeichnet sind. Die Erfindung ist jedoch nicht auf Biegepressen im engeren Sinne begrenzt und kann ebenso bei Abkantpressen, Stanzmaschinen, Schneidemaschinen und anderen Maschinen verwendet werden, bei denen zwei Maschinenteile eine gefahrbringende Arbeitsbewegung gegeneinander ausführen und bei denen eine mitlaufende, berührungslos wirkende Schutzeinrichtung zur Vermeidung von Unfällen eingesetzt wird.

Bei einer Biegepresse erfolgt die Umformung des Werkstücks im Wesentlichen dadurch, dass das Werkstück mit einem Biegestempel gegen eine Matrize gepresst wird. Die gewünschte Formgebung lässt sich durch die entsprechende Ausbildung des Biegestempels und der Matrize erreichen. Häufig ist der Biegestempel ein Werkzeug, das an einer beweglichen Oberwange angeordnet ist, während die Matrize an einer feststehenden Unterwange sitzt. Da es jedoch nur auf die Relativbewegung der beiden Wangen zueinander ankommt, kann alternativ auch die Matrize bewegt sein, oder es können beide Wangen gegeneinander bewegt werden. Die erfindungsgemäße Sicherheitseinrichtung kann in allen genannten Fällen zur Anwendung kommen.

Es ist leicht nachvollziehbar, dass von einer Biegepresse eine erhebliche Gefahr für das Bedienpersonal ausgeht, insbesondere die Gefahr von Quetschungen oder sogar die Abtrennung von Körperteilen. Dementsprechend ist es bereits seit Langem bekannt, Biegepressen und dergleichen mit einer Sicherheitseinrichtung zu versehen, um Unfälle so weit wie möglich zu vermeiden.

Es gibt im Stand der Technik eine Vielzahl von Vorschlägen für mitlaufende Schutzeinrichtungen für Biegepressen und vergleichbare Maschinen, bei denen ein erstes Maschinenteil eine Arbeitsbewegung gegen ein zweites Maschinenteil ausführt. Beispielsweise sei hier auf folgende Druckschriften verwiesen, ohne dass diese Auflistung einen Anspruch auf Vollständigkeit erhebt: DE 852 037, DE 27 50 234 C2, DE 197 17 299 A1, DE 100 27 156 A1, DE 101 43 505 A1, DE 101 14 784 A1, DE 102 46 609 A1, DE 102 47 136 A1, DE 103 09 399 A1, DE 10 2004 058 472 A1, DE 10 2004 020 024 A1, GB 1 307 078, AU 566 795 B, US 5,579,884, US 6,316,763 B1, WO 03/080268 A1, WO 00/67932.

Viele Vorschläge beschäftigen sich damit, den Gefahrenbereich an der vorlaufenden Kante des bewegten Maschinenteils bestmöglich abzusichern, um gefährliche Eingriffe in die Arbeitsbewegung der Maschine aus verschiedenen Richtungen und/oder in verschiedenen Betriebssituationen zuverlässig zu erkennen. Zahlreiche Vorschläge, wie in US 5,579,884, beruhen darauf, mehrere Lichtschranken/Lichtstrahlen im Bereich der vorlaufenden Kante des bewegten Maschinenteils anzuordnen. Sobald zumindest einer dieser Lichtstrahlen in der Arbeitsbewegung des Maschinenteils unterbrochen wird, wird ein Ausgangssignal erzeugt, das die Arbeitsbewegung der Maschine stoppt. Es gibt auch Vorschläge, die Vielzahl von Lichtschranken mit einer Kamera auf der Empfängerseite zu realisieren, etwa in DE 10 2004 058 472 A1. Die Kamera wird dann mit einem "großen" Lichtstrahl vollflächig beleuchtet. Überwacht und ausgewertet werden in diesem Fall allerdings nur ausgewählte Pixelbereiche des Kamerasensors. Diese Pixelbereiche lösen ein Abschaltsignal aus, wenn ein Schatten den Lichtstrahl auf dem Pixelbereich verdeckt.

EP 1 674 785 B1 beschreibt eine kamerabasierte Sicherheitseinrichtung zum Absichern einer Gesenkbiegepresse. Es sind verschiedene mögliche Schutzfelder dargestellt. Neben sehr kleinen Schutzfeldern, die weniger als 10 % der Größe des Gesichtsfeldes der Empfangseinrichtung betragen, sind auch großflächige Schutzfelder dargestellt. In einer Ausgestaltung besteht ein großflächiges Schutzfeld aus mehreren, nicht zusammenhängenden, streifenförmigen Segmenten. Dabei sind die streifenförmigen Segmente parallel zu derjenigen Bewegungsebene angeordnet, die durch die voraus laufende Kante definiert ist.

In allen Fällen stellt sich die Frage, wie man gefährliche Eingriffe in die Bewegungsbahn eines Pressenwerkzeugs zuverlässig erkennt, ohne unnötige Fehlalarme auszulösen. Letztere beeinträchtigen nämlich die Produktivität der Maschine. Darüber hinaus möchte man eine möglichst schnelle Erkennung eines gefährlichen Eingriffs, um die Maschine im Gefahrenfall entsprechend schnell abschalten zu können. Alle Lichtschranken- bzw. Schutzfeldgeometrien sind dabei ein Kompromiss im Spannungsfeld zwischen den Anforderungen Geschwindigkeit, Erkennungssicherheit, Fehlalarmvermeidung und Realisierungskosten. Trotz der vielen bereits bekannten Vorschläge besteht weiterhin der Wunsch, eine Sicherheitsvorrichtung anzugeben, die die zum Teil sehr gegensätzlichen Anforderungen möglichst optimal erfüllt.

Des weiteren besteht der Wunsch, das mit Hilfe der optischen Sicherheitsschranken aufgespannte Schutzfeld bis zum Ende der Arbeitsbewegung aufrechtzuerhalten, damit der Maschinenbediener bis zum Ende der der Arbeitsbewegung geschützt ist. Ein Problem ist in diesem Fall jedoch, dass die am weitesten vorlaufende Sicherheitsschranke schon von dem zweiten Maschinenteil und/oder dem zu bearbeitenden Werkstück unterbrochen wird, bevor das Ende der Arbeitsbewegung erreicht ist. Daher müssen die optischen Sicherheitsschranken zum Ende der Arbeitsbewegung hin deaktiviert werden. Dieses bewusste Deaktivieren nennt man Muting. Ohne Muting könnte das erste Maschinenteil seine Arbeitsbewegung nicht vollenden, da es durch die Sicherheitseinrichtung vorzeitig abgeschaltet würde.

DE 103 53 353 A1 offenbart eine kamerabasierte Sicherheitseinrichtung, bei der das Schutzfeld vollflächig überwacht und zum Ende der Arbeitsbewegung kontinuierlich verkleinert wird. Ein solcher Ansatz erfordert allerdings eine hohe Rechenleistung mit der Folge, dass die Kosten für die praktische Realisierung hoch sind.

EP 1 387 121 B1 offenbart eine Sicherheitseinrichtung mit mehreren einzelnen Sicherheitslichtschranken, die zum Ende der Arbeitsbewegung sequentiell deaktiviert werden. Diese bekannte Sicherheitseinrichtung ermöglicht somit einen gewissen Schutz des Bedieners bis zum Abschluss der Arbeitsbewegung. Allerdings ist der Schutz noch nicht optimal, da die Anzahl und Verteilung der Sicherheitsschranken nur relativ grobe Schritte bei der Anpassung des Schutzfeldes zulässt. In dem Moment, in dem eine Sicherheitslichtschranke deaktiviert wird, "springt" das aufgespannte Schutzfeld nach oben und hinterlässt eine Lücke am Werkstück, die erst mit der weiteren Arbeitsbewegung des ersten Maschinenteils wieder geschlossen wird.

EP 1 319 886 A2 offenbart eine Sicherheitseinrichtung gemäß dem Oberbegriff des Anspruchs 1.

Vor diesem Hintergrund ist es eine Aufgabe der vorliegenden Erfindung, eine Sicherheitseinrichtung der eingangs genannten Art anzugeben, die einen optimalen Schutz des Bedieners einer hochproduktiv arbeitenden Maschine sicherstellt, bei der aber gleichzeitig der für die Realisierung der Schutzfunktion benötigte Rechenaufwand und demzufolge die benötigte Rechenleistung weiter verringert sind. Es ist des weiteren eine Aufgabe, eine Sicherheitseinrichtung der eingangs genannten Art anzugeben, die einen optimalen Schutz des Bedieners insbesondere am Ende der gefährlichen Arbeitsbewegung ermöglicht.

Nach einem ersten Aspekt der vorliegenden Erfindung wird diese Aufgabe durch eine Vorrichtung der eingangs genannten Art gelöst, bei der die optischen Sicherheitsschranken zum Ende der Arbeitsbewegung hin weitgehend stationär im Bereich des zweiten Maschinenteils gehalten sind, wobei die Auswerteeinheit dazu ausgebildet ist, die optischen Sicherheitsschranken zeitlich nacheinander jeweils zu deaktivieren, bevor sie durch das erste Maschinenteil unterbrochen werden, wobei die Sicherheitseinrichtung einen Lichtsender und einen Lichtempfänger aufweist, wobei zumindest der Lichtempfänger mit dem ersten Maschinenteil so gekoppelt ist, dass er der Kante in der Arbeitsbewegung des ersten Maschinenteils voraus läuft, und wobei der Lichtsender einen Lichtstrahl erzeugt, der den Lichtempfänger beleuchtet, und wobei der Lichtempfänger einen Bildsensor mit einer Vielzahl von Bildpunkten aufweist, um ein ortsaufgelöstes Abbild des Lichtstrahls aufzunehmen, wobei die optischen Sicherheitsschranken mit Hilfe ausgewählter Bildpunkte realisiert sind, ferner mit einer optischen Messschranke, die in Richtung der Arbeitsbewegung vor den optischen Sicherheitsschranken angeordnet ist, wobei das Schutzfeld mit Hilfe der optischen Messschranke zum Ende der Arbeitsbewegung direkt oberhalb des Werkstücks stationär gehalten wird, indem die jeweils ausgewählten Bildpunkte synchron zu der Arbeitsbewegung des ersten Maschinenteils, jedoch In entgegengesetzter Richtung verschoben werden.

Gemäß einem weiteren Aspekt, der sowohl in Ergänzung zum ersten Aspekt als auch isoliert davon eine vorteilhafte Weiterbildung gegenüber bekannten Sicherheitseinrichtungen darstellt, bilden die optischen Sicherheitsschranken zumindest drei zusammenhängende Streifen von optischen Sicherheitsschranken bilden, wobei ein erster Streifen mit ersten optischen Schranken und ein zweiter Streifen mit zweiten optischen Sicherheitsschranken in etwa parallel zueinander angeordnet sind und ein dritter Streifen mit dritten optischen Sicherheitsschranken zwischen dem ersten und dem zweiten Streifen liegt, wobei der erste und der zweite Streifen jeweils im Wesentlichen parallel zu der Bewegungsebene liegen und der dritte Streifen im Wesentlichen orthogonal zu der Bewegungsebene liegt.

Der neuen Sicherheitseinrichtung liegt einerseits die Idee zugrunde, die optischen Sicherheitsschranken nicht alle gleichzeitig zu deaktivieren, sondern sukzessive jeweils kurz bevor jede Sicherheitsschranke unterbrochen wird. In einer bevorzugten Variante wird das Schutzfeld mit Hilfe einer ersten Messschranke weitgehend stationär an dem Werkstück gehalten und die Höhe des Schutzfeldes wird von oben reduziert, so dass das weiterhin nach unten fahrende erste Maschinenteil kein Abschaltsignal auslöst. Bei der bevorzugten Verwendung von separaten optischen Sicherheitsschranken werden die Sicherheitsschranken dementsprechend schrittweise von oben nach unten deaktiviert (Muting von oben), während der untere Rand des Schutzfeldes an bzw. direkt oberhalb des Werkstücks gehalten wird.

Das Stationärhalten des Schutzfeldes am Werkstück kann man auf unterschiedliche Weise realisieren. Eine vorteilhafte Ausführungsform ist, das Schutzfeld mit Hilfe eines Kamerasensors mit einer Pixelmatrix zu realisieren und die Auswahl der ausgewerteten Pixel synchron zu der Abwärtsbewegung des ersten Maschinenteils auf dem Kamerasensor nach oben zu verschieben, so dass ein "virtuell" stationäres Schutzfeld relativ zu dem bewegten ersten Maschinenteil entsteht. Alternativ oder ergänzend könnte der Empfänger mechanisch derart mit dem bewegten Maschinenteil gekoppelt sein, dass er auf dem letzten Teilstück der Arbeitsbewegung von dem Maschinenteil entkoppelt ist und somit stationär gehalten werden kann. Beispielsweise kann die mechanische Kopplung eine elastische Feder beinhalten, die es der Sicherheitseinrichtung ermöglicht, an einem Anschlag zu stoppen, während das erste Maschinenteil weiter gegen das zweite Maschinenteil bewegt wird.

Ein Muting der Sicherheitsschranken von oben ist vorteilhaft, da ein Eingreifen in die Bewegungsbahn des ersten Maschinenteils zum Ende der Arbeitsbewegung hin typischerweise direkt am Werkstück erfolgt, etwa um die Lage des Werkstücks kurz vor dem eigentlichen Biege- oder Schneidvorgang zu korrigieren. Das Muting von oben gewährleistet, dass der besonders kritische Bereich am Werkstück gleichmäßig und ohne sprunghafte Änderungen überwacht wird. Eine gegebenenfalls sprunghafte Verkleinerung des Schutzfeldes aufgrund der Deaktivierung einzelner Sicherheitsschranken findet allenfalls entfernt von der kritischen Klemmstelle am Werkstück statt. Des weiteren ermöglicht das Muting von oben eine Realisierung, die mit einer moderaten Rechenleistung in der Auswerte- und Steuereinheit auskommt, insbesondere, wenn das Schutzfeld mit einzelnen, voneinander beabstandeten Sicherheitsschranken aufgespannt wird. Die Deaktivierung der optischen Schranken bzw. die Verkleinerung des Schutzfeldes von oben ist somit ein innovativer Ansatz, der den gefährlichen Klemmpunkt direkt oberhalb des Werkstücks im letzten Teil der Arbeitsbewegung optimal und lückenlos absichert.

Der neuen Sicherheitseinrichtung liegt andererseits die Idee zugrunde, ein Schutzfeld mit zumindest drei zusammenhängenden Streifen von optischen Schranken zu verwenden. Zwei der drei Streifen liegen im Wesentlichen parallel zu der Bewegungsebene und definieren somit eine Mindestbreite des Schutzfeldes quer zur Bewegungsrichtung. Diese beiden Streifen umschließen einen Innenbereich des Schutzfeldes. Der dritte orthogonale Streifen "sichert" den zwischen dem ersten und dem zweiten Streifen liegenden Innenbereich gegen einen Eingriff parallel zur Bewegungsebene ab. Die im wesentlichen orthogonale Anordnung der drei Streifen spannt ein relativ großes Schutzfeld mit vergleichsweise wenigen Überwachungsstrahlen auf. Das große Schutzfeld ermöglicht es, Eingriffe aus unterschiedlichen Richtungen zuverlässig zu erkennen. Andererseits lassen sich die separaten Schanken sehr einfach und schnell auf Eingriffe überwachen. Zudem ermöglicht die im wesentlichen orthogonale Anordnung ein sehr schnelles Auslesen ausgewählter Pixel bei der bevorzugten Realisierung der Sicherheitseinrichtung mit einem Kamerasensor.

Die neue Sicherheitseinrichtung ermöglicht demzufolge einen optimalen Schutz des Bedieners mit geringem Rechenaufwand und dementsprechend geringer Rechenleistung.

Vorteilhafterweise bilden die drei Streifen eine in etwa U-förmige Struktur, die in der Bewegungsrichtung des ersten Maschinenteils offen ist. In einer besonders bevorzugten Ausgestaltung bildet der dritte Streifen zumindest teilweise den oberen Rand des Schutzfeldes.

Diese Maßnahmen tragen zu einem optimalen Schutz des Bedieners einer Maschine bei, da sie einen wirksamen Schutz gegenüber Nachgreifen in Richtung der Arbeitsbewegung des ersten Maschinenteils ermöglichen.

In einer weiteren Ausgestaltung weisen der erste und der zweite Streifen jeweils ein oberes Ende auf, wobei das obere Ende des ersten Streifens den dritten Streifen überragt, und wobei das obere Ende des zweiten Streifens mit dem dritten Streifen bündig ist.

Diese Maßnahme trägt zu einer weiteren Verbesserung des Schutzes des Bedieners der Maschine bei. Durch die Erhöhung des Schutzfeldes auf einer Seite wird auf dieser Seite ein noch besserer Schutz gegenüber Nachgreifen in Richtung der Arbeitsbewegung des ersten Maschinenteiles erreicht. Dies gilt insbesondere dann, wenn das Schutzfeld auf derjenigen Seite erhöht ist, die dem Bediener der Maschine zugewandt ist.

In einer weiteren Ausgestaltung definiert der erste Streifen einen ersten Seitenrand des Schutzfeldes, wobei der erste Streifen einen definierten Abstand zu der Bewegungsebene aufweist.

Vorzugsweise ist der definierte Abstand größer als eine Fingerbreite und insbesondere größer als 20mm. Der erste Streifen bildet den äußeren Rand des Schutzfeldes auf der Bedienerseite. Diese Maßnahme trägt zu einem optimalen Schutz des Bedieners bei. Somit kann ein Eingriff in die Bewegungsebene von der Bedienerseite frühzeitig erkannt werden.

In einer weiteren Ausgestaltung ist der zweite Streifen in etwa an der Bewegungsebene angeordnet.

Vorzugsweise ist der zweite Streifen zwar an der Bewegungsebene angeordnet, er liegt jedoch nicht in der Bewegungsebene, sondern ein Stück versetzt dazu. Mit anderen Worten ist der zweite Streifen ebenfalls in einem Abstand von der Bewegungsebene angeordnet. Dieser Abstand ist jedoch wesentlich kleiner als der Abstand zwischen der Bewegungsebene und dem ersten Streifen. Der kleine Abstand ist insbesondere beim Biegen von Kästen von Vorteil, da hierdurch die Anzahl von Fehlalarmen durch einen sich aufstellenden Teil des zu bearbeitenden Werkstückes reduziert wird. Andererseits stellt der zweite Streifen einen wichtigen Schutz an der Bewegungsebene sicher.

In einer weiteren Ausgestaltung ist das Schutzfeld zu beiden Seiten der Bewegungsebene aufgespannt, wobei der erste Streifen und der zweite Streifen auf unterschiedlichen Seiten der Bewegungsebene liegen.

Diese Ausgestaltung gewährleistet einen Schutz gegenüber Eingriffen von der Vorderseite und von der Rückseite der Maschine. Die Ausgestaltung ermöglicht somit, auf Zugangssicherungen, die einen Zugang zu der Maschinenrückseite unterbinden, zu verzichten oder solche Zugangssicherungen zumindest zu reduzieren.

In einer weiteren Ausgestaltung besitzt die Sicherheitseinrichtung eine vierte optische Sicherheitsschranke, die zusammen mit dem dritten Streifen einen zweiten Seitenrand des Schutzfelds definiert.

In dieser Ausgestaltung schneidet der dritte Streifen den zweiten Streifen, und er ragt seitlich über den zweiten Streifen hinaus. Um dennoch einen ausgedehnten seitlichen Rand des Schutzfeldes zu erreichen, ist eine vierte optische Sicherheitsschranke vorgesehen, die zusammen mit dem freien Ende des dritten Streifens den Seitenrand des Schutzfeldes definiert. Die Ausgestaltung ermöglicht eine hohe Dichte von optischen Sicherheitsschranken an der gefährlichen Bewegungsebene sowie ein zu beiden Seiten der Bewegungsebene ausgedehntes, zweidimensionales Schutzfeld mit einer vergleichsweise geringen Anzahl an Sicherheitsschranken.

In einer weiteren Ausgestaltung weisen der erste und der zweite Streifen jeweils ein unteres Ende auf, wobei zwischen den beiden unteren Enden eine fünfte optische Sicherheitsschranke angeordnet ist, die zusammen mit den beiden unteren Enden einen unteren Rand des Schutzfeldes definiert.

Vorzugsweise ist die fünfte optische Sicherheitsschranke näher zu dem ersten Streifen und weiter weg von dem zweiten Streifen angeordnet, und der Abstand zwischen der fünften optischen Schranke und dem zweiten Streifen (und damit die Öffnung am unteren Rand des Schutzfeldes) ist größer als eine Fingerbreite. Mit dieser Ausgestaltung wird ein Eingriff in das Schutzfeld von schräg unten gut erkannt. Gleichzeitig bleibt das Schutzfeld unten jedoch offen, was dazu beiträgt, Fehlalarme zu reduzieren und die Anzahl der optischen Schranken gering zu halten.

In einer weiteren Ausgestaltung weist die Maschine einen Nachlaufweg auf, wobei die Anzahl der optischen Sicherheitsschranken in Abhängigkeit von der Länge des Nachlaufweges konfigurierbar ist.

Diese Ausgestaltung ermöglicht eine Optimierung des für die Realisierung der Schutzfunktion erforderlichen Rechenaufwandes sowie eine noch bessere Vermeidung von Fehlalarmen. Bei einer Maschine mit einem großen Nachlaufweg wird ein hohes Schutzfeld benötigt, um sicherzustellen, dass die Maschine bei einem Eingriff in die Bewegungsebene innerhalb ihres Nachlaufweges sicher zum Stillstand kommt. Dagegen reicht bei einer Maschine mit einem kleinen Nachlaufweg ein Schutzfeld mit geringerer Höhe. Vorteilhafterweise kann die Höhe des Schutzfeldes in mehreren Schritten an die Länge des Nachlaufweges angepasst werden. Vorzugsweise nimmt mit abnehmender Länge des Nachlaufweges die Anzahl der unterhalb des dritten Streifens liegenden optischen Schranken ab, wobei der dritte Streifen unabhängig von der Länge des jeweiligen Nachlaufwegs auf jeden Fall Teil des an den Nachlaufweg angepassten Schutzfelds ist.

Für die konkrete Realisierung dieser Maßnahme sind unterschiedliche Ausgestaltungen denkbar. In einer ersten Ausgestaltung werden von sämtlichen optischen Sicherheitsschranken die Daten in die Auswerteeinheit eingelesen, wobei in der Auswerteeinheit lediglich die Daten derjenigen optischen Schranken ausgewertet werden, die das an den Nachlaufweg angepasste Schutzfeld definieren. Dagegen werden in einer anderen Ausgestaltung lediglich von denjenigen optischen Schranken Daten in die Auswerteeinheit eingelesen, die das an den Nachlaufweg angepasste Schutzfeld definieren.

In einer weiteren Ausgestaltung ist unterhalb des zweiten Streifens eine erste optische Messschranke angeordnet, insbesondere in Form eines ersten optischen Messfeldes.

Diese Ausgestaltung ist unabhängig von der hier vorgeschlagenen Realisierung des Schutzfeldes auch für sich genommen eine erfinderische Weiterbildung aller gattungsgemäßen Sicherheitseinrichtungen einschließlich solcher Sicherheitseinrichtungen, die ein Schutzfeld nicht aus separaten optischen Schranken aufbauen, sondern vollflächig mit einem Kamerasensor überwachen. Das optische Messfeld ist bevorzugt ein ausgewählter Pixelbereich auf einem solchen Kamerasensor, kann jedoch prinzipiell auch eine separate Lichtschranke sein. Die optische Messschranke wird bei der Arbeitsbewegung des ersten Maschinenteils in Richtung auf das zu bearbeitende Werkstück als erstes unterbrochen, da sie unterhalb des zweiten Streifens angeordnet ist. Sie wird daher von dem Werkstück unterbrochen, bevor das Werkstück in das Schutzfeld eintritt. Die frühe Unterbrechung der Messschranke kann vorteilhaft dazu verwendet werden, ein "weiches" Abbremsen des ersten Maschinenteils einzuleiten. Damit können die Maschinenbelastung, Maschinenvibrationen und der Maschinenverschleiß reduziert werden. Des weiteren wird die optische Messschranke in bevorzugten Ausgestaltungen dazu verwendet, ein Muting der nachfolgenden optischen Überwachungsschranken zu bewirken. Die Verwendung einer optischen Messschranke zum Auslösen des Mutings ermöglicht eine sehr exakt definierte Position für den Beginn des Mutings im Verlauf der Arbeitsbewegung. Zudem passt sich die Mutingposition automatisch an eine wechselnde Werkstückdicke an.

In einer weiteren Ausgestaltung ist oberhalb des ersten und/oder zweiten Streifens eine weitere optische Messschranke angeordnet, insbesondere in Form eines zweiten optischen Messfeldes.

Mit dieser Ausgestaltung ist die neue Sicherheitseinrichtung in der Lage, den aktuellen Nachlaufweg des ersten Maschinenteils nach einem Abschaltsignal abzuschätzen, wie dies in der eingangs genannten DE 10 2004 058 472 A1 beschrieben ist. Hinsichtlich der Details bei der Nachlaufmessung wird insoweit auf diese Druckschrift verwiesen.

Vorzugsweise weist die Sicherheitseinrichtung in einer weiteren Ausgestaltung einen Lichtsender und einen Lichtempfänger auf, wobei zumindest der Lichtempfänger mit dem ersten Maschinenteil so gekoppelt ist, dass er der Kante in der Arbeitsbewegung des ersten Maschinenteil voraus läuft, wobei der Lichtsender einen Lichtstrahl erzeugt, der weitgehend parallel zu der Kante verläuft und den Lichtempfänger beleuchtet, wobei der Lichtempfänger einen Bildsensor mit einer Vielzahl von Bildpunkten aufweist, um ein ortsaufgelöstes Abbild des Lichtstrahls aufzunehmen, und wobei die optischen Schranken mit Hilfe ausgewählter Bildpunkte realisiert sind.

Diese Ausgestaltung ermöglicht eine sehr robuste und kostengünstige Realisierung. Sie vereinfacht die Justage der neuen Sicherheitseinrichtung an der Maschine und ermöglicht eine einfache nachträgliche Änderung von Schutzfeldgeometrien. Des weiteren ermöglicht diese Ausgestaltung eine sehr kostengünstige und wartungsarme Realisierung des bevorzugten Mutings von oben.

In einer weiteren Ausgestaltung sind die optischen Sicherheitsschranken der neuen Sicherheitseinrichtung im Querschnitt jeweils weitgehend quadratpunktförmig.

Diese Ausgestaltung ermöglicht eine besonders einfache und kostengünstige Realisierung von separaten optischen Schranken mit einem einzigen Kamerasensor. Die in etwa quadratpunktförmigen Schranken lassen sich mit ausgewählten Pixelbereichen realisieren, die einerseits klein sind und andererseits sehr schnell ausgelesen werden können.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne dabei den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer Biegepresse mit einem Ausführungsbeispiel der neuen Sicherheitseinrichtung,
- Fig. 2: eine schematische Darstellung der Sicherheitseinrichtung aus Fig. 1,
- Fig. 3: eine vereinfachte Darstellung eines Abbildes von dem Lichtstrahl, der den Lichtempfänger in der Sicherheitseinrichtung aus FIg. 1 beleuchtet, und
- Fig. 4: eine vereinfachte Darstellung des Abbildes zu Beginn des neuen Mutings.

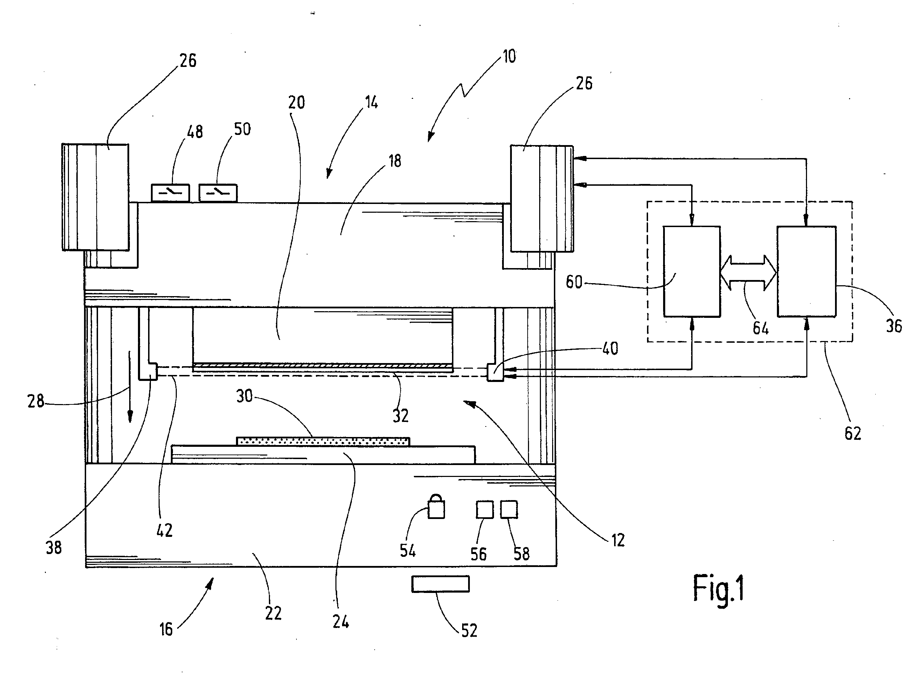

In Fig. 1 ist eine Biegepresse als eine bevorzugte Maschine für die neue Sicherheitseinrichtung in ihrer Gesamtheit mit der Bezugsziffer 10 bezeichnet. An der Biegepresse 10 kommt eine Sicherheitseinrichtung 12 nach einem Ausführungsbeispiel der vorliegenden Erfindung zur Anwendung, um eine Verletzung von Bedienpersonen im Arbeitslauf der Biegepresse 10 zu verhindern. Es sei jedoch nochmals darauf hingewiesen, dass die vorliegende Erfindung nicht nur bei Biegepressen, sondern bei Pressen allgemein und auch bei anderen Maschinen eingesetzt werden kann, bei denen zwei Maschinenteile eine Arbeitsbewegung gegeneinander ausführen, so zum Beispiel auch bei Stanz- und Schneidmaschinen. Die Erfindung ist auch nicht auf Anwendungsfälle beschränkt, bei denen lediglich ein Maschinenteil bewegt ist. Die Sicherheitseinrichtung nach der vorliegenden Erfindung kann gleichermaßen bei Maschinen eingesetzt werden, bei denen mehrere Maschinenteile relativ zueinander bewegt sind.

Die Biegepresse 10 besitzt ein erstes, in diesem Fall oberes Maschinenteil 14 und ein zweites, hier unteres Maschinenteil 16. Das erste Maschinenteil 14 weist eine Oberwange 18 auf, an der ein Oberwerkzeug 20, beispielsweise ein Biegestempel, angeordnet ist. Das zweite Maschinenteil 16 weist eine Unterwange 22 auf, an der ein Unterwerkzeug 24, beispielsweise eine Matrize, angeordnet ist. Das erste Maschinenteil 14 kann über einen Antrieb 26 in Richtung eines Pfeils 28 eine Arbeitsbewegung ausführen. Das Oberwerkzeug 20 (Biegestempel) und das Unterwerkzeug 24 (Matrize) bilden zusammen die Presswerkzeuge, mit denen ein Werkstück 30 umgeformt werden kann. Bei dem Werkstück 30 handelt es sich in der Regel um ein Blechteil.

Das Oberwerkzeug 20 besitzt eine vorlaufende Kante 32, die aufgrund der Arbeitsbewegung 28 eine Bewegungsebene 34 definiert. Jeder Eingriff eines Objekts in die Bewegungsebene 34, wie etwa ein Eingriff mit der Hand eines Bedieners, stellt eine Gefahrensituation dar, insbesondere, wenn sich das Oberwerkzeug 20 bereits dicht an das Unterwerkzeug 24 angenähert hat. Die Sicherheitseinrichtung 12, zu der auch eine Auswerteeinheit 36 gehört, dient dazu, solche Einriffe im Bereich der vorlaufenden Kante 32 zu detektieren, um in Abhängigkeit davon die Arbeitsbewegung 28 der Biegepresse 10 anzuhalten.

Die Sicherheitseinrichtung 12 beinhaltet einen Lichtsender 38 und einen Lichtempfänger 40, die hier jeweils an der Oberwange 18 befestigt sind. Der Lichtsender 38 und der Lichtempfänger 40 sind mit der Oberwange 18 gekoppelt, so dass sie mit der Arbeitsbewegung 28 des Oberwerkzeugs 20 mitlaufen. Durch die Anbringung an der Oberwange 18 laufen der Lichtsender 38 und der Lichtempfänger 40 der Kante 32 voraus. Der Lichtsender 38 erzeugt einen Lichtstrahl 42, der parallel zu der vorlaufenden Kante 32 des Oberwerkzeugs 20 verläuft und den Lichtempfänger 40 beleuchtet. Dementsprechend bilden der Lichtsender 38 und der Lichtempfänger 40 eine Lichtschranke, die einen Schutzraums, der im Wesentlichen durch den Lichtstrahl 42 definiert ist, um die Kante 32 des Oberwerkzeugs 20 herum absichert.

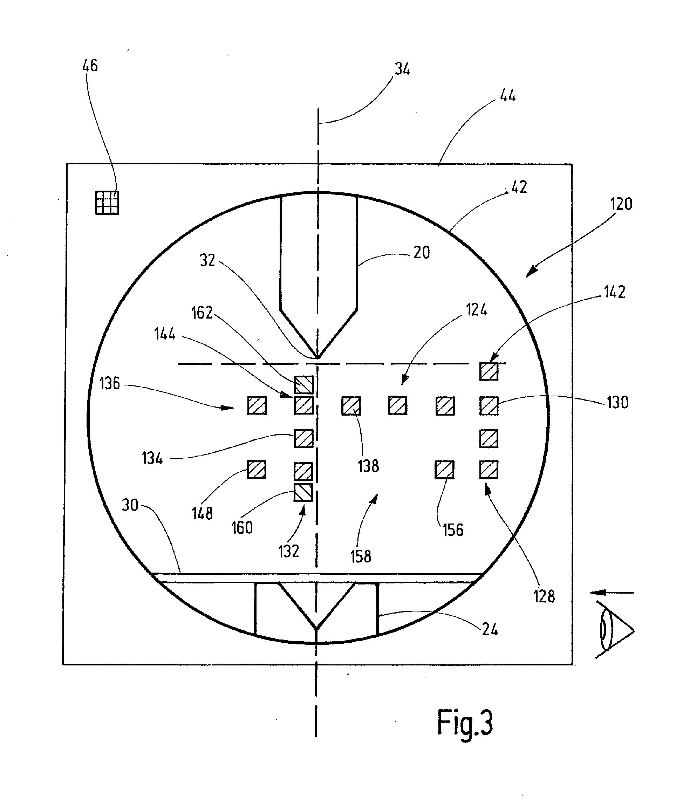

Der Lichtsender 38 besitzt eine Lichtquelle, die in einem besonders bevorzugten Ausführungsbeispiel eine so genannte Power-LED mit einer Lichtausbeute von etwa 70 lm/W ist. Prinzipiell könnte es sich jedoch auch um eine Laserdiode, Leuchtstoffröhre, Halogenlampe oder eine andere Lichtquelle handeln. Der Lichtempfänger 40 weist einen Bildsensor 44 mit einer Vielzahl von Bildpunkten 46 auf. Vorzugsweise handelt es sich um einen Bildsensor mit einer matrixartigen Anordnung von Bildpunkten 46, wie dies in Fig. 3 dargestellt ist. Der Bildsensor 44 ist in einem bevorzugten Ausführungsbeispiel ein CMOS-Bildsensor mit einer logarithmischen Wandlerkennlinie. Der Lichtempfänger 40 besitzt ferner eine Abbildungsoptik mit einem Brennpunkt, an dem eine Aperturblende angeordnet ist. Der lichte Innendurchmesser der Aperturblende liegt in bevorzugten Ausführungsbeispielen in einem Bereich zwischen etwa 50 µm bis 150 µm. In einem bevorzugten Ausführungsbeispiel beträgt der lichte Innendurchmesser etwa 75 µm.

Das in Fig. 1 dargestellte Ausführungsbeispiel, bei dem sowohl der Lichtsender 38 als auch der Lichtempfänger 40 mit der Arbeitsbewegung 28 des Oberwerkzeugs 20 mitlaufen, ist aus heutiger Sicht bevorzugt. Prinzipiell könnte der Lichtsender 38 aber auch starr angeordnet sein, wenn er beispielsweise ein Lichtband oder eine Lichtebene erzeugt, die parallel zu der Bewegungsebene 34 liegt. Prinzipiell könnte auch der Lichtempfänger 40 stationär sein, sofern er in der Lage ist, ein Abbild des Lichtstrahls 42 an allen relevanten Stellen im Verlauf der Arbeitsbewegung 28 des Oberwerkzeugs 20 aufzunehmen.

Zu der Sicherheitseinrichtung 12 gehört ferner die Auswerteeinheit 36. Die Auswerteeinheit 36 kann separat von dem Lichtsender 38 und dem Lichtempfänger 40 angeordnet sein. Alternativ hierzu kann die Auswerteeinheit 36 ganz oder teilweise in dem Lichtsender 38 und/oder in dem Lichtempfänger 40 integriert sein. Die Auswerteeinheit 36 dient dazu, den Lichtempfänger 40 anzusteuern und in Abhängigkeit von Signalen, die der Lichtempfänger 40 bereitstellt ein Ausgangssignal zu erzeugen, um die Arbeitsbewegung 28 des Oberwerkzeugs 20 anzuhalten. Was die Auswertung der mit dem Lichtempfänger aufgenommen Bilder angeht, so kann diese entweder im Lichtempfänger 40 selbst oder in der Auswerteeinheit 36 erfolgen. Demzufolge unterscheiden sich für diese beiden Alternativen die von dem Lichtempfänger 40 bereitgestellten Ausgangssignale.

Die Auswerteeinheit 36 arbeitet ein Auswerte- und Steuerprogramm ab. Hierzu werden der Auswerteeinheit 36 Signale verschiedener Schalter und Taster zugeführt. Zu diesen Schaltern und Tastern gehören beispielsweise zwei Endschalter 48, 50, ein Fußtaster 52, ein Not-Aus-Taster 54, ein Betriebsartenwahlschalter 56 und ein Quittierungstaster 58. Die beiden Endschalter 48, 50 sind nur dann geschlossen, wenn sich das Oberwerkzeug 20 in seinem oberen Totpunkt befindet. Die geschlossene Stellung der Endschalter 48, 50 signalisiert damit, dass sich die Biegepresse 10 in ihrem Ausgangszustand zur Durchführung eines Arbeitszyklus befindet. Durch Betätigung des Fußtasters 52 wird ein Arbeitszyklus der Biegepresse 10 gestartet. In einer Gefahrensituation kann die Bedienperson die Arbeitsbewegung 28 des Oberwerkzeugs 20 durch Betätigen des Not-Aus-Tasters 54 unterbrechen. Über den Betriebsartenwahlschalter 56 kann ein Schutzfeldmodus der Sicherheitseinrichtung 12 ausgewählt werden, der dann über den Quittierungstaster 58 zu quittieren ist. Die Anmelderin der vorliegenden Erfindung bietet unter der Bezeichnung PSS^{®} und unter der Bezeichnung PNOZ^{®}multi bevorzugte fehlersichere Auswerteeinheiten an.

Typischerweise besitzt die Biegepresse 10 zusätzlich zu der Auswerteeinheit 36 noch eine Betriebssteuerung 60, die den "normalen" Betriebsablauf steuert. Prinzipiell kann die Betriebssteuerung 60 mit der Auswerteeinheit 36 kombiniert sein, was durch ein strichliniert dargestelltes Gehäuse 62 angedeutet ist. Denkbar ist auch, dass die Auswerteeinheit 36 in die Betriebssteuerung 60 integriert ist.

Die Auswerteeinheit 36 und die Betriebssteuerung 60 können Daten austauschen, was durch einen Pfeil 64 angedeutet ist. Die in Fig. 1 dargestellte Anbindung des Lichtempfängers 40 und des Antriebs 26 an die Auswerteeinheit 36 und die Betriebssteuerung 60 hat lediglich schematischen Charakter. So wurde beispielsweise darauf verzichtet, beide Antriebe 26 mit der Auswerteeinheit 36 und der Betriebssteuerung 60 zu verbinden. Ebenso wurde auf die Darstellung von Schützen verzichtet, die zwischen der Auswerteeinheit 36 und dem Antrieb 26 angeordnet sind und dem Trennen des Antriebs 26 von der Versorgungsspannung dienen. Dies soll keine einschränkende Wirkung haben.

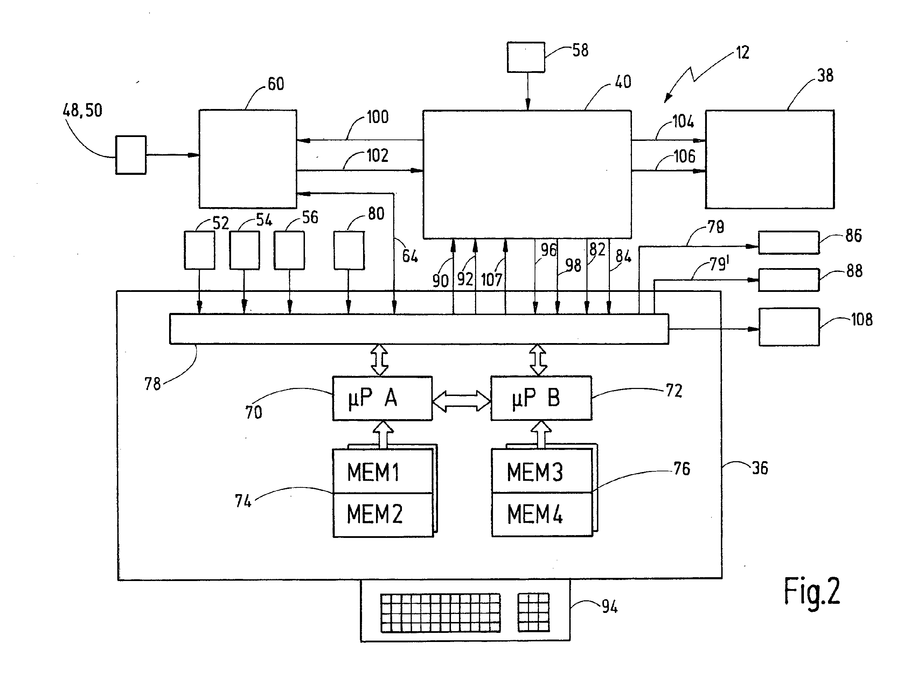

Fig. 2 zeigt in einer schematischen Darstellung den prinzipiellen Aufbau der Sicherheitseinrichtung 12.

Die Auswerteeinheit 36 ist bevorzugt mehrkanalig redundant ausgebildet. Dies ist in Fig. 2 anhand von zwei Prozessoren 70, 72 dargestellt, die sich gegenseitig kontrollieren und ihre Verarbeitungsergebnisse austauschen können. In besonders bevorzugten Ausführungsbeispielen sind die Prozessoren 70, 72 diversitär, das heißt, es handelt sich um verschiedene Prozessoren, um die Wahrscheinlichkeit eines gleichzeitigen Fehlers zu reduzieren. Jeder der beiden Prozessoren 70, 72 arbeitet ein Auswerte- und Steuerprogramm ab, was in entsprechend zugeordneten Speicherbereichen 74, 76 abgelegt ist.

Mit der Bezugsziffer 78 ist eine Schnittstelleneinheit bezeichnet, mit deren Hilfe die Prozessoren 70, 72 Eingangssignale an Eingängen einlesen und Ausgangssignale an Ausgängen ausgeben. In dem bevorzugten Ausführungsbeispiel erzeugen die Prozessoren 70, 72 u. a. ein fehlersicheres, vorzugsweise redundantes Ausgangssignal 79, 79', mit dessen Hilfe die Arbeitsbewegung 28 des Oberwerkzeugs 20 angehalten wird, wenn ein gefährlicher Eingriff in den Bereich unterhalb der vorlaufenden Kante 32 detektiert wird.

In Fig. 2 sind diejenigen Komponenten und Signale dargestellt, die zur Erläuterung der prinzipiellen Funktionsweise der Sicherheitseinrichtung 12 erforderlich sind. Diese Darstellung erhebt somit keinen Anspruch auf Vollständigkeit. So wurde beispielsweise bei der Auswerteeinheit 36 auf die Darstellung von Diagnoseausgängen verzichtet.

Die Sicherheitseinrichtung 12 besitzt interne Testfunktionen, so dass sie selbst dann, wenn bei ihr oder einem mit ihr verbundenen Gerät eine Fehlfunktion auftritt, stets einen sicheren Zustand der Biegepresse 10 gewährleistet. Daher sind an die Sicherheitseinrichtung 12 extrem hohe Anforderungen an die eigene Fehlersicherheit gestellt. Die Sicherheitseinrichtung 12 muss vorgegebene Sicherheitsstandards einhalten, die beispielsweise in der Europäischen Norm EN 954-1 oder einer vergleichbaren Norm, beispielsweise der Norm IEC 61508 oder der Norm EN ISO 13849-1, niedergelegt sind. Die Sicherheitseinrichtung 12 erfüllt zumindest die Sicherheitskategorie 3 der Europäischen Norm EN 954-1 oder ihr Safety Integrity Level (SIL) erreicht zumindest die Stufe 2 gemäß der Norm IEC 61508. Der Lichtsender 38 und der Lichtempfänger 40 bilden zusammen eine berührungslos wirkende Schutzeinrichtung (BWS), die Typ 4 der Norm EN 61496-1 erfüllt.

Nachfolgend wird eine Arbeitsweise der Sicherheitseinrichtung 12 anhand eines Pressenhubs beschrieben. Der Bediener der Biegepresse 10 löst durch Betätigung des Fußtasters 52 einen Pressenhub aus. Ausgehend vom oberen Umkehrpunkt bewegt sich das Oberwerkzeug 20 auf das Unterwerkzeug 24 zu. In der Regel erfolgt dies mit einer relativ hohen Schließgeschwindigkeit (beispielsweise >10 mm/s; Eilgang). Ab einem definierten Hub des Oberwerkzeugs 20 löst die Auswerteeinheit 36 einen Bremsvorgang aus. Hat das Oberwerkzeug 20 eine niedrigere Schließgeschwindigkeit erreicht (beispielsweise ≤10 mm/s; Schleichgang), wird dies der Auswerteeinheit 36 mittels einer hierfür ausgebildeten Erfassungseinheit 80 angezeigt. Die Erfassungseinheit ist an der Biegepresse 10 angeordnet und erzeugt ein entsprechendes Schleichgang-Signal. Dies kann in einigen Ausführungsbeispielen vorteilhaft verwendet werden, um die Sicherheitseinrichtung zu deaktivieren (Muting), damit das Oberwerkzeug 20 die Arbeitsbewegung trotz Unterbrechen der Überwachungsstrahlen durch das Werkstück 30 vollenden kann. Nach Erreichen des unteren Umkehrpunktes ist der Biegevorgang beendet, das Oberwerkzeug 20 fährt wieder nach oben. In einigen Ausführungsbeispielen kann das Umschalten vom Eilgang in den Schleichgang entfallen, da die Sicherheitseinrichtung aufgrund des neuen Mutingverfahrens in der Lage ist, den gefährlichen Öffnungsspalt bis zum Schluss zu überwachen.

Unterbricht ein Objekt das Schutzfeld in der Arbeitsbewegung 28 ohne Muting, wird dies mit Schutzfeldzustandssignalen 82, 84 angezeigt. Dies führt dazu, dass die Auswerteeinheit 36 Schütze 86, 88, die zwischen dem (nicht dargestellten) Antrieb 26 und einer (nicht dargestellten) Versorgungsspannung angeordnet sind, derart ansteuert, dass der Antrieb 26 von der Versorgungsspannung getrennt wird. Somit wird die Arbeitsbewegung 28 des Oberwerkzeugs 20 unterbrochen. Allerdings bewegt sich das Oberwerkzeug 20 noch um seinen Nachlaufweg weiter. Es ist in einigen Ausführungsbeispielen möglich, dass die Arbeitsbewegung 28 des Oberwerkzeugs 20 weiter fortgesetzt werden kann und der Biegevorgang zu Ende gebracht wird, sobald das Objekt aus dem Schützfeld entfernt ist.

Der Lichtempfänger 40 enthält zwei Ausgangsschaltelemente. Somit können zwei redundante Schutzfeldzustandssignale 82, 84 erzeugt werden. Die beiden Schutzfeldzustandssignale 82, 84 signalisieren den Zustand des Schutzfeldes. Ist das Schutzfeld frei, nehmen sie beispielsweise den Wert 1 an, ist das Schutzfeld dagegen unterbrochen, nehmen sie beispielsweise den Wert 0 an.

In bevorzugten Ausführungsbeispiel beinhaltet das Schutzfeld drei Schutzfeldbereiche, nämlich einen vorderen, einen mittleren und einen hinteren Schutzfeldbereich. Der mittlere Schutzfeldbereich besteht in den bevorzugten Ausführungsbeispielen im Wesentlichen aus den optischen Schranken des zweiten Streifens. Der vordere und hintere Bereich beinhalten die optischen Schranken, die vor bzw. hinter dem zweiten Streifen angeordnet sind, jeweils von der Seite des Bedieners aus gesehen.

Es ist optional möglich, das Schutzfeld durch Deaktivieren des vorderen und/oder des hinteren Schutzfeldbereichs an verschiedene Bearbeitungsvorgänge anzupassen. Zur Anpassung des Schutzfeldes betätigt der Bediener einen Betriebsartenwahlschalter 56. Jeder Stellung des Betriebsartenwahlschalters 56 ist eine Bearbeitung bzw. Biegeaufgabe und somit ein Schutzfeldmodus zugeordnet. Vorzugsweise werden folgende vier Schutzfeldmodi unterschieden:
- Schutzfeldmodus STANDARD, bei dem das volle Schutzfeld mit allen optischen Schranken zur Verfügung steht. Dieser Schutzfeldmodus wird vor allem bei flachen Werkstücken angewandt.
- Schutzfeldmodus KASTENBIEGEN, bei dem ein reduziertes Schutzfeld verwendet wird, welches aus den optischen Schranken des mittleren und hinteren Schutzfeldbereichs besteht. Dieser Schutzfeldmodus wird vorteilhaft bei Werkstücken angewandt, die mehrfach gebogen werden müssen, beispielsweise bei einem Kasten. Da bei dieser Bearbeitung eine Unterbrechung der optischen Schranken des vorderen Schutzfeldbereiches zu erwarten ist, werden diese Schranken deaktiviert. Somit führt eine Unterbrechung nicht zu einem Fehlalarm und einem Stopp der Arbeitsbewegung 28.
- Schutzfeldmodus ANSCHLAG, bei dem ein reduziertes Schutzfeld verwendet wird, welches aus den optischen Schranken des vorderen und mittleren Schutzfeldbereichs besteht. Dieser Schutzfeldmodus wird angewandt, wenn ein hinterer Anschlag bis in die Nähe der Bewegungsebene 24 reicht. Da bei dieser Bearbeitung eine Unterbrechung der optischen Schranken des hinteren Schutzfeldbereiches zu erwarten ist, werden diese Schranken deaktiviert.
- Schutzfeldmodus KASTENBIEGEN MIT ANSCHLAG, bei dem ein reduziertes Schutzfeld verwendet wird, welches lediglich aus den optischen Schranken des zweiten Streifens besteht. Dieser Schutzfeldmodus kombiniert die Modi KASTENBIEGEN und ANSCHLAG.

Der Bediener muss einen angewählten Schutzfeldmodus mit reduziertem Schutzfeld durch Betätigung des Quittierungstasters 58 quittieren. Erst nach erfolgter Quittierung wird ein Pressenhub mit reduziertem Schutzfeld ausgeführt. Das von dem Quittierungstaster 58 erzeugte Signal wird dem Lichtempfänger 40 zugeführt. Ein Schutzfeldmodus mit reduziertem Schutzfeld ist vorzugsweise lediglich für einen Pressenhub aktiv. Soll erneut ein Pressenhub mit reduziertem Schutzfeld ausgeführt werden, so ist erneut eine Auswahl des gewünschten Schutzfeldmodus über den Betriebsartenwahlschalter 56 mit anschließendem Quittieren durch Betätigung des Quittierungstasters 58 erforderlich.

In Abhängigkeit von dem angewählten Schutzfeldmodus erzeugt die Auswerteeinheit 36 Schutzfeldmodussignale 90, 92, die dem Lichtempfänger 40 zugeführt werden. Somit kann der Lichtempfänger 40 die Geometrie des Schutzfeldes an die durchzuführende Bearbeitung anpassen. Da die zwei Schutzfeldmodussignale 90, 92 hier jeweils zwei Zustände annehmen können, können hier insgesamt vier Schutzfeldmodi unterschieden werden. Die Eingänge des Lichtempfängers 40 zur Aufnahme der Schutzfeldmodussignale 90, 92 sind fehlersicher ausgebildet.

Der Nachlaufweg ist derjenige Weg, den das Oberwerkzeug 20 noch zurücklegt, nachdem ein Eingriff in das Schutzfeld detektiert wurde. Beim Betrieb der Biegepresse 10 muss sichergestellt sein, dass das Oberwerkzeug 20 trotz des Nachlaufwegs sicher vor einem in die Bewegungsebene 34 eingreifenden Objekt zum Stillstand kommt. Aus diesem Grund kann die Höhe des Schutzfeldes hier an den Nachlaufweg der Biegepresse 10 angepasst werden, wie dies prinzipiell schon in DE 202 17 426 U1 beschrieben ist. In einem Fall wird der Nachlaufweg bei der Konfiguration der Sicherheitseinrichtung 12 über eine Tastatur 94 eingegeben und in der Sicherheitseinrichtung 12, vorzugsweise in dem Lichtempfänger 40, gespeichert. Abhängig von dem für den Nachlaufweg abgespeicherten Wert wird dann die optimale Höhe des Schutzfeldes ermittelt. Die Anordnung der Tastatur 94 an der Auswerteeinheit 36 soll keine einschränkend Wirkung haben. Beispielsweise kann die Tastatur 94 auch an dem Lichtempfänger 40 angeordnet sein.

Der Lichtempfänger 40 verfügt über weitere Eingänge und Ausgänge. So wird dem Lichtempfänger 40, ausgehend von der Betriebssteuerung 60, ein Pressenzustandssignal 102 zugeführt. Mit dem Pressenzustandssignal 102 wird dem Lichtempfänger 40 mitgeteilt, dass sich das Oberwerkzeug 20 im oberen Umkehrpunkt befindet. Der Lichtempfänger 40 erzeugt ein Schaltsignal 104, mit dem er die Lichtquelle des Lichtsenders 38 ein- bzw. ausschalten kann. Zudem erzeugt der Lichtempfänger 40 ein Steuersignal 106, mit dem er die Intensität der Lichtquelle des Lichtsenders 38 steuern kann. Ferner wird dem Lichtempfänger 40 ausgehend von der Auswerteeinheit 36 ein Einrichtsignal 107 zugeführt, das dem Lichtempfänger 40 signalisiert, dass sich die Biegepresse 10 in einer Betriebsart EINRICHTEN befindet. Befindet sich die Biegepresse 10 in der Betriebsart EINRICHTEN, werden die Sicherheitsfunktionen der Sicherheitseinrichtung 12 deaktiviert.

Die Auswerteeinheit 36 ist dazu ausgebildet, Ventile 108 anzusteuern. Bei den Ventilen 108 kann es sich um ein Sicherheitsventil und um ein Nachsaugventil handeln.

Fig. 3 zeigt eine vereinfachte Darstellung eines Abbildes von dem Lichtstrahl, der den Lichtempfänger in der Sicherheitseinrichtung beleuchtet.

Wie in Fig. 3 zu erkennen ist, besitzt der Lichtstrahl 42 hier einen kreisförmigen Querschnitt, der den Bildsensor 44 beleuchtet. Der Lichtsender 38 ist unterhalb des Oberwerkzeuges 20 so angeordnet, dass die untere Spitze des Oberwerkzeuges 20 einschließlich der Kante 32 einen Schattenbild in dem Abbild 120 erzeugt. Ebenso erzeugt das Unterwerkzeug 24 mit dem Werkstück 30 am Ende der Arbeitsbewegung ein Schattenbild. Die in Fig. 3 dargestellte Situation zeigt den Fall, dass sich das Oberwerkzeug 20 bereits an das Unterwerkzeug 24 angenähert hat.

Der Bildsensor 44 weist eine Vielzahl von Bildpunkten 46 auf, mit denen das Abbild 120 hier ortsaufgelöst aufgenommen wird. Aus der Vielzahl von Bildpunkten 46 ist eine Anzahl von Bildpunkten ausgewählt, die dahingehend überwacht werden, ob der Lichtstrahl 42 an diesen ausgewählten Bildpunkten detektierbar ist oder nicht. Die ausgewählten Bildpunkte bilden somit optische Sicherheitsschranken 130, 134, 138, die jeweils ein Abschaltsignal 79, 79' auslösen, wenn sie von einem Objekt durchbrochen werden. Die optischen Sicherheitsschranken 130, 134, 138 sind in Fig. 3 mit ansteigenden Linien schraffiert dargestellt und besitzen hier jeweils einen rechteckigen, bevorzugt weitgehend quadratpunktförmigen Querschnitt.

Der Lichtempfänger 40 ist mit dem ersten Maschinenteil 14 so gekoppelt, dass er der Kante 32 in der Arbeitsbewegung 28 des ersten Maschinenteils 14 voraus läuft. Daher bewegen sich die optischen Schranken in der Arbeitsbewegung 28 derart mit, dass sie der Kante 32 vorauslaufen. Die optischen Schranken spannen ein im Querschnitt zweidimensionales Schutzfeld 124 auf.

Die optischen Sicherheitsschranken bilden hier drei Streifen, nämlich einen ersten Streifen 128 mit ersten optischen Schranken 130, einen zweiten Streifen 132 mit zweiten optischen Schranken 134 und einen dritten Streifen 136 mit dritten optischen Schranken 138. Der erste Streifen 128 und der zweite Streifen 132 liegen in einem ersten Abstand parallel zueinander und parallel zu der Bewegungsebene 34. Der dritte Streifen 136 liegt zwischen dem ersten Streifen 128 und dem zweiten Streifen 132 und verbindet diese miteinander. Der dritte Streifen 136 liegt hier orthogonal zu der Bewegungsebene 34. Die Streifen 128, 132 und 136 hängen zusammen und bilden ein nach unten (in Richtung der Arbeitsbewegung) geöffnetes U. In dem dargestellten bevorzugten Ausführungsbeispiel schneidet der dritte Streifen 136 die beiden parallelen Streifen 128, 132, wobei er auf der Bedienerseite der Maschine mit dem ersten Streifen 128 bündig abschließt, während er auf der vom Bediener abgewandten Seite über den zweiten Streifen 132 seitlich hinausragt.

Der erste Streifen 128 besitzt ein oberes Ende 142 und der zweite Streifen 132 besitzt ein oberes Ende 144. Das obere Ende 142 überragt hier den dritten Streifen 136, während das obere Ende 144 mit dem dritten Streifen 136 bündig ist.

Der erste Streifen 128 bildet einen ersten Seitenrand des Schutzfeldes 124. Dabei weist der erste Streifen 128 einen relativ großen Abstand zu der Bewegungsebene 34 auf. Der Abstand ist hier deutlich größer als eine Fingerbreite. Der zweite Streifen 132 verläuft in etwa an der Bewegungsebene 34, jedoch zu der vom Bediener abgewandten Seite versetzt. Er besitzt somit einen sehr kleinen Abstand zu der Bewegungsebene 34.

Wie der Darstellung in Fig. 3 zu entnehmen ist, liegen der erste Streifen 128 und der zweite Streifen 132 auf unterschiedlichen Seiten der Bewegungsebene 34. Auf derjenigen Seite der Bewegungsebene 34, auf der der zweite Streifen 132 liegt, ist hier eine vierte optische Sicherheitsschranke 148 angeordnet, um die Absicherung der Maschine auf der vom Bediener abgewandten Seite zu verbessert. Die vierte optische Sicherheitsschranke 148 definiert zusammen mit der dritten optischen Sicherheitsschranke am freien Ende des dritten Streifens einen zweiten Seitenrand des Schutzfeldes 124.

Zwischen den unteren Enden des ersten und zweiten Streifens 128 und 132 ist hier eine fünfte optische Sicherheitsschranke 156 angeordnet. Zwischen der fünften Sicherheitsschranke 156 und dem zweiten Streifen verbleibt eine Öffnung 158, die größer als eine Fingerbreite ist. Zusammen mit den beiden unteren Enden der Streifen 128, 132 definiert die fünfte optische Sicherheitsschranke 156 den unteren Rand des Schutzfeldes 124.

Unterhalb des Schutzfeldes ist hier ein vorauseilender Messstrahl in Form eines Messfeldes 160 angeordnet. Das vorauseilende Messfeld 160 wird von ausgewählten Bildpunkten gebildet und löst ein sukzessives Muting der optischen Schranken 130, 134, 138, 148, 156 aus. In dem bevorzugten Ausführungsbeispiel wird die Sicherheitseinrichtung beim Unterbrechen den Messfeldes 160 in einen speziellen Mutingmodus versetzt. In diesem speziellen Mutingmodus wird das Schutzfeld mit Hilfe des Messfeldes 160 am gefährlichen Klemmpunkt direkt oberhalb des Werkstücks 30 stationär gehalten und die optischen Schranken 130, 134, 138, 148, 156 werden sukzessive von oben nach unten deaktiviert, jeweils kurz bevor das Oberwerkzeug 20 in das nunmehr räumlich stationäre Schutzfeld eintaucht. In den bevorzugten Ausführungsbeispielen werden die optischen Sicherheitsschranken 130, 134, 138, 148, 156 und das Messfeld 160 unmittelbar oberhalb des Klemmpunktes stationär gehalten, indem die jeweils ausgewerteten Bildpunkte synchron zu der Arbeitsbewegung des Oberwerkzeugs, jedoch in entgegengesetzter Richtung (im vorliegenden Fall also nach oben) verschoben werden. In einigen bevorzugten Ausführungsbeispielen kann die Anordnung und Verteilung der optischen Schranken 130, 134, 138, 148, 156 in dem speziellen Mutingmodus eine andere sein als in der vorhergehenden Phase der Arbeitsbewegung, in der der Messstrahl 160 das Werkstück noch nicht berührt hat (also außerhalb des speziellen Mutingmodus).

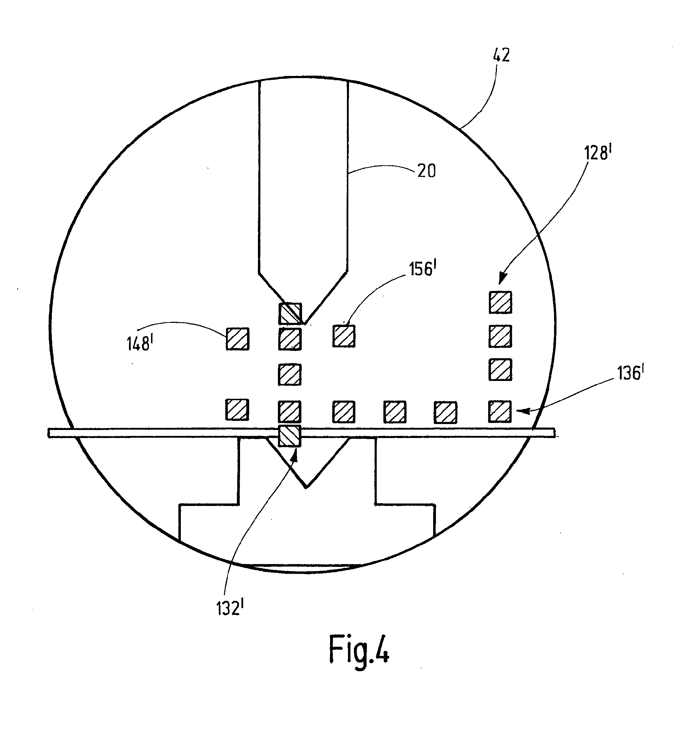

In einem bevorzugten Ausführungsbeispiel wird der dritte Streifen 136 mit Beginn des speziellen Mutingmodus an den unteren Rand des Schutzfeldes verschoben, so dass die drei Streifen 128, 132 und 136 nun ein nach oben geöffnetes U oder eine andere topfartige Struktur bilden. Eine solche Anordnung und Verteilung der optischen Sicherheitsschranken 130, 134, 138, 148, 156 zu Beginn des Mutings ist in Fig. 4 beispielhaft dargestellt. Das Oberwerkzeug taucht in dem speziellen Mutingmodus also von oben in ein topfartiges, zumindest weitgehend stationäres Schutzfeld ein, das direkt über dem Werkstück liegt. In einigen Varianten dieses Ausführungsbeispiels kann der erste Streifen 128' noch weitere Schranken 130' besitzen, die den Streifen 128' gegen die Bewegungsrichtung des Oberwerkzeugs nach oben verlängern, so dass auf der Bedienerseite eine noch höhere "Schutzwand" gegen Eingriffe von schräg oben gebildet wird. Des weiteren kann der Streifen 128' schräg zum Oberwerkzeug hin geneigt sein und/oder es können weitere optische Sicherheitsschranken zwischen dem Streifen 128' und dem Oberwerkzeug angeordnet sein.

In dem bevorzugten Ausführungsbeispiel wird der Nachlaufweg im Betrieb der Biegepresse 10 wiederholt überprüft und mit einem zuvor abgespeicherten Wert verglichen. Wird bei der Überprüfung festgestellt, dass der gemessene Nachlaufweg größer ist als der abgespeicherte Wert, wird ein Fehlersignal erzeugt. Die Überwachung des Nachlaufweges erfolgt vorteilhaft nach einem Verfahren und mit einer Auswerte- und Steuereinheit, wie diese in DE 10 2004 058 472 A1 beschrieben sind. Für die Überwachung des Nachlaufweges ist im hier dargestellten Ausführungsbeispiel ein zusätzlicher Messstrahl 162 oberhalb des zweiten Streifens 132 angeordnet. Die Messung des Nachlaufweges beginnt, sobald die Schutzfeldzustandssignale 82, 84 anzeigen, dass eine der optischen Sicherheitsschranken 130, 134, 138, 148, 156 unterbrochen. Nachdem das Oberwerkzeug 20 zum Stillstand gekommen ist, wird das Messfeld 162 ausgewertet. Wird bei dieser Auswertung festgestellt, dass das Messfeld 162 nicht unterbrochen ist, bedeutet dies, dass der Nachlaufweg innerhalb des durch den abgespeicherten Wert vorgegebenen Bereichs liegt. Wird dagegen festgestellt, dass das nachlaufende Messfeld 162 unterbrochen ist, ist der Nachlaufweg zu lang. Die Nachlaufwegmessung bzw. Nachlaufwegüberprüfung erfolgt bevorzugt im Lichtempfänger 40, wobei das Ergebnis über zwei sichere Ausgänge mittels zweier redundanter Nachlaufwegmessungssignale 96, 98 der Auswerteeinheit 36 zugeführt wird. Dabei nehmen die Nachlaufwegmessungssignale 96, 98 beispielsweise den Wert 1 an, wenn der Nachlaufweg innerhalb des vorgegebenen Bereiches liegt, und den Wert 0 an, wenn der Nachlaufweg außerhalb des vorgegebenen Bereiches liegt.

In einigen Ausführungsbeispielen kann die Anzahl der auszuwertenden optischen Sicherheitsschranken 130, 134, 138, 148, 156 von der Länge des Nachlaufwegs abhängig sein und vom Bediener konfiguriert werden, wie dies in DE 202 17 426 U1 beschrieben ist, die hier durch Bezugnahme aufgenommen ist.

## Patentansprüche

1. Sicherheitseinrichtung für eine Maschine (10), bei der ein erstes Maschinenteil (14, 18, 20) eine Arbeitsbewegung (28) gegen ein zweites Maschinenteil (16, 22, 24) ausführt, um ein Werkstück (30) zu bearbeiten, wobei das erste Maschinenteil (14, 18, 20) eine in Bewegungsrichtung vorlaufende Kante (32) besitzt, die eine Bewegungsebene (34) definiert, mit einer Vielzahl von optischen Sicherheitsschranken (130, 134, 138, 148, 156) und einer Auswerteeinheit (36), wobei sich die optischen Sicherheitsschranken (130, 134, 138, 148, 156) in der Arbeitsbewegung (28) mit dem ersten Maschinenteil (14, 18, 20) derart mitbewegen, dass sie der Kante (32) mit unterschiedlichen Abständen vorauslaufen, wobei die optischen Sicherheitsschranken (130, 134, 138, 148, 156) ein im Querschnitt zweidimensionales Schutzfeld (124) aufspannen, wobei die Auswerteeinheit (36) dazu ausgebildet ist, ein Stoppsignal zum Anhalten des ersten Maschinenteils (14, 18, 20) in Abhängigkeit von den optischen Sicherheitsschranken (130, 134, 138, 148, 156) zu erzeugen, wobei die optischen Sicherheitsschranken (130, 134, 138, 148, 156) zum Ende der Arbeitsbewegung (28) weitgehend stationär im Bereich des zweiten Maschinenteils gehalten sind, und wobei die Auswerteeinheit (36) dazu ausgebildet ist, die optischen Sicherheitsschranken (130, 134, 138, 148, 156) zeitlich nacheinander jeweils zu deaktivieren, bevor sie durch das erste Maschinenteil (14, 18, 20) unterbrochen werden, wobei die Sicherheitseinrichtung (12) einen Lichtsender (38) und einen Lichtempfänger (40) aufweist, wobei zumindest der Lichtempfänger (40) mit dem ersten Maschinenteil (14, 18, 20) so gekoppelt ist, dass er der Kante (32) in der Arbeitsbewegung (28) des ersten Maschinenteils (14, 18, 20) voraus läuft, und wobei der Lichtsender (38) einen Lichtstrahl (42) erzeugt, der den Lichtempfänger (40) beleuchtet, **dadurch gekennzeichnet, dass** der Lichtempfänger (40) einen Bildsensor (44) mit einer Vielzahl von Bildpunkten (46) aufweist, um ein ortsaufgelöstes Abbild (120) des Lichtstrahls (42) aufzunehmen, wobei die optischen Sicherheitsschramken (130, 134, 138, 148, 156) mit Hilfe ausgewählter Bildpunkte (126) realisiert sind, ferner mit einer optischen Messschranke (160), die in Richtung der Arbeitsbewegung (28) vor den optischen Sicherheitsschranken (130, 134, 138, 148, 156) angeordnet ist, wobei das Schutzfeld (124) mit Hilfe der optischen Messschranke (160) zum Ende der Arbeitsbewegung (28) direkt oberhalb des Werkstücks (30) stationär gehalten wird, indem die jeweils ausgewählten Bildpunkte (126) synchron zu der Arbeitsbewegung des ersten Maschinenteiles (14, 18, 20), jedoch in entgegengesetzter Richtung verschoben werden.

2. Sicherheitseinrichtung nach Anspruch 1, **dadurch gekennzeichnet, dass** die optischen Sicherheitsschranken (130, 134, 138, 148, 156) zumindest drei zusammenhängende Streifen von optischen Sicherheitsschranken bilden, wobei ein erster Streifen (128) mit ersten optischen Sicherheitsschranken (130) und ein zweiter Streifen (132) mit zweiten optischen Sicherheitsschranken (134) in etwa parallel zueinander angeordnet sind und ein dritter Streifen (136) mit dritten optischen Sicherheitsschranken (138) zwischen dem ersten und dem zweiten Streifen (128, 132) liegt, wobei der erste und der zweite Streifen (128, 132) jeweils im wesentlichen parallel zu der Bewegungsebene (34) liegen und der dritte Streifen (136) im Wesentlichen orthogonal zu der Bewegungsebene (34) liegt.

3. Sicherheitseinrichtung nach Anspruch 2, **dadurch gekennzeichnet, dass** der dritte Streifen (136) zumindest teilweise einen oberen Rand des Schutzfelds (124) bildet.

4. Sicherheitseinrichtung nach Anspruch 2 oder 3, **dadurch gekennzeichnet, dass** der erste und der zweite Streifen (128, 132) jeweils ein oberes Ende aufweisen, wobei das obere Ende des ersten Streifens (128) den dritten Streifen (136) überragt, und wobei das obere Ende des zweiten Streifens (132) mit dem dritten Streifen (136) bündig ist.

5. Sicherheitseinrichtung nach einem der Ansprüche 2 bis 4, **dadurch gekennzeichnet, dass** der erste Streifen (128) einen ersten Seitenrand des Schutzfelds (124) definiert, wobei der erste Streifen (128) einen definierten Abstand zu der Bewegungsebene (34) aufweist.

6. Sicherheitseinrichtung nach einem der Ansprüche 2 bis 5, **dadurch gekennzeichnet, dass** der zweite Streifen (132) in etwa an der Bewegungsebene (34) angeordnet ist.

7. Sicherheitseinrichtung nach einem der Ansprüche 2 bis 6, **dadurch gekennzeichnet, dass** das Schutzfeld (124) zu beiden Seiten der Bewegungsebene (34) aufgespannt ist, wobei der erste Streifen (128) und der zweite Streifen (132) auf unterschiedlichen Seiten der Bewegungsebene (34) liegen.

8. Sicherheitseinrichtung nach einem der Ansprüche 2 bis 7, **gekennzeichnet durch** eine vierte optische Schranke (148), die zusammen mit dem dritten Streifen (136) einen zweiten Seitenrand des Schutzfelds (124) definiert.

9. Sicherheitseinrichtung nach einem der Ansprüche 2 bis 8, **dadurch gekennzeichnet, dass** der erste und der zweite Streifen (128, 132) jeweils ein unteres Ende aufweisen, wobei zwischen den beiden unteren Enden eine fünfte optische Schranke (156) angeordnet ist, die zusammen mit den beiden unteren Enden einen unteren Rand des Schutzfelds (124) definiert.

10. Sicherheitseinrichtung nach einem der Ansprüche 1 bis 9, **dadurch gekennzeichnet, dass** die Maschine (10) einen Nachlaufweg aufweist, wobei die Anzahl der Anzahl der optischen Sicherheitsschranken (130, 134, 138, 148, 156) in Abhängigkeit von der Länge des Nachlaufweges konfigurierbar ist.

11. Sicherheitseinrichtung nach einem der Ansprüche 1 bis 10, **dadurch gekennzeichnet, dass** zwischen dem ersten Maschinenteil (14, 18, 20) und dem Schutzfeld (124) eine weitere optische Messschranke (162) angeordnet ist.

12. Sicherheitseinrichtung nach einem der Ansprüche 1 bis 11, **dadurch gekennzeichnet, dass** die optischen Sicherheitsschranken (130, 134, 138, 148, 156) im Querschnitt jeweils rechteckig, insbesondere quadratpunktförmig sind.

## Claims

1. A safety device for a machine (10) in which a first machine part (14, 18, 20) performs a working movement (28) towards a second machine part (16, 22, 24) in order to process a workpiece (30), wherein the first machine part (14, 18, 20) comprises a leading edge (32) in the direction of movement, which leading edge defines a plane of movement (34), said safety device comprising a plurality of optical safety barriers (130, 134, 138, 148, 156) and an evaluation unit (36), wherein the optical safety barriers (130, 134, 138, 148, 156) move in the working movement (28) simultaneously with the first machine part (14, 18, 20) in such a manner that said safety barriers move in advance of the edge (32) at different spaced dispositions, wherein the optical safety barriers (130, 134, 138, 148, 156) span a protective field (124) that has a two-dimensional cross section, wherein the evaluation unit (36) is designed for generating a stop signal to stop the first machine part (14, 18, 20) in dependence upon the optical safety barriers (130, 134, 138, 148, 156), wherein, towards the end of the working movement (28), the optical safety barriers (130, 134, 138, 148, 156) are held substantially stationary in the region of the second machine part, and wherein the evaluation unit (36) is designed for deactivating the optical safety barriers (130, 134, 138, 148, 156) sequentially one following the other before they are interrupted by the first machine part (14, 18, 20), wherein the safety device (12) comprises a light transmitter (38) and a light receiver (40), wherein at least the light receiver (40) is coupled to the first machine part (14, 18, 20) in such a manner that it moves in advance of the edge (32) during the working movement (28) of the first machine part (14,18, 20), and wherein the light transmitter (38) generates a light beam (42) that illuminates the light receiver (40), **characterized in that** the light receiver (40) comprises an image sensor (44) having a plurality of pixels (46) in order to capture a locally resolved image (120) of the light beam (42), wherein the optical barriers (130, 134, 138, 148, 156) are implemented by means of selected pixels (126), and further comprising an optical measuring barrier (160) arranged in advance of the optical safety barriers (130, 134, 138, 148, 156) in the direction of the working movement (28), wherein the protective field (124) is stationary held immediately above the workpiece (30) at the end of the working movement (28) by using the optical measuring barrier (160) and by shifting the respectively selected pixels (126) synchronously with the working movement of the first machine part (14, 18, 20) but in an opposite direction.

2. The safety device of claim 1, **characterized in that** the optical safety barriers (130, 134, 138, 148, 156) form at least three interrelated lines of optical safety barriers, wherein a first line (128) having first optical safety barriers (130) and a second line (132) having second optical safety barriers (134) are arranged approximately in parallel with each other and a third line (136) having third optical safety barriers (138) lies between the first and the second line (128, 132), wherein the first and the second line (128, 132) each lie substantially in parallel with the plane of movement (34) and the third line (136) lies substantially orthogonal with respect to the plane of movement (34).

3. The safety device of claim 2, **characterized in that** the third line (136) at least partially forms an upper edge of the protective field (124).

4. The safety device of claim 2 or 3, **characterized in that** the first and the second line (128, 132) each comprise an upper end, wherein the upper end of the first line (128) protrudes beyond the third line (136) and wherein the upper end of the second line (132) is flush with the third line (136).

5. The safety device of any one of claims 2 to 4, **characterized in that** the first line (128) defines a first side edge of the protective field (124), wherein the first line (128) is at a defined spacing with respect to the plane of movement (34).

6. The safety device of any one of claims 2 to 5, **characterized in that** the second line (132) is arranged approximately at the plane of movement (34).

7. The safety device of any one of claims 2 to 6, **characterized in that** the protective field (124) is spanned on both sides of the plane of movement (34), wherein the first line (128) and the second line (132) lie on different sides of the plane of movement (34).

8. The safety device of any one of claims 2 to 7, **characterized by** a fourth optical barrier (148) that together with the third line (136) defines a second side edge of the protective field (124).

9. The safety device of any one of claims 2 to 8, **characterized in that** the first and the second line (128, 132) each comprise a lower end, wherein a fifth optical barrier (156) is arranged between the two lower ends, which fifth optical barrier together with the two lower ends defines a lower edge of the protective field (124).

10. The safety device of any one of claims 1 to 9, **characterized in that** the machine (10) comprises an overtravel path, wherein the number of the optical safety barriers (130, 134, 138, 148, 156) can be configured in dependence upon the length of the over-travel path.

11. The safety device of any one of claims 1 to 10, **characterized in that** a further optical measuring barrier (162) is arranged between the first machine part (14, 18, 20) and the protective field (124).

12. The safety device of any one of claims 1 to 11, **characterized in that** the optical safety barriers (130, 134, 138, 148, 156) each have a rectangular, in particular square-shaped, cross section.

## Revendications

1. Dispositif de sécurité destiné à une machine (10), dans lequel une première partie de machine (14, 18, 20) exécute un mouvement d'usinage (28) vers une deuxième partie de machine (16, 22, 24) afin de préparer une pièce à usiner (30), dans lequel la première partie de machine (14, 18, 20) possède un bord (32) avant dans la direction de mouvement qui définit un plan de mouvement (34), comportant une pluralité de barrières optiques de sécurité (130, 134, 138, 148, 156) et une unité d'évaluation (36), dans lequel les barrières optiques de sécurité (130, 134, 138, 148, 156) se déplacent en association avec la première partie de machine (14, 18, 20) lors du mouvement d'usinage (28) de telle manière qu'elles précèdent les bords (32) avec des espacements différents, dans lequel les barrières optiques de sécurité (130, 134, 138, 148, 156) définissent un champ de protection bidimensionnel (124) en section transversale, dans lequel l'unité d'évaluation (36) est conçue pour générer un signal d'arrêt pour arrêter la première partie de machine (14, 18, 20) en fonction des barrières optiques de sécurité (130, 134, 138, 148, 156), dans lequel les barrières optiques de sécurité (130, 134, 138, 148, 156) sont maintenues pratiquement stationnaires dans la région de la deuxième partie de machine à la fin du mouvement d'usinage (28), et dans lequel l'unité d'évaluation (36) est conçue pour désactiver respectivement les barrières optiques de sécurité (130, 134, 138, 148, 156) l'une après l'autre dans le temps, avant qu'elles soient interrompues par la première partie de machine (14, 18, 20), dans lequel le dispositif de sécurité (12) comprend un émetteur de lumière (38) et un récepteur de lumière (40), dans lequel au moins le récepteur de lumière (40) est couplé à la première partie de machine (14, 18, 20) de telle manière qu'il précède le bord (32) de la première partie de machine (14, 18, 20) lors du mouvement d'usinage (28), et dans lequel l'émetteur de lumière (38) génère un faisceau lumineux (42) qui éclaire le récepteur de lumière (40), **caractérisé en ce que** le récepteur de lumière (40) comprend un capteur d'image (44) comportant une pluralité de points d'image (46) afin d'acquérir une image résolue spatialement (120) du faisceau lumineux (42), dans lequel les barrières optiques de sécurité (130, 134, 138, 148, 156) sont réalisées à l'aide de points d'image sélectionnés (126), et comportant en outre une barrière optique de mesure (160) qui est disposée dans la direction du mouvement d'usinage (28) avant les barrières optiques de sécurité (130, 134, 138, 148, 156), dans lequel le champ de protection (124) est maintenu stationnaire à l'aide de la barrière optique de mesure (160) à la fin du mouvement d'usinage (28) directement au-dessus de la pièce à usiner (30), en faisant en sorte que les points d'image respectivement sélectionnés (126) soient décalés en synchronisme avec le mouvement d'usinage de la première partie de machine (14, 18, 20) mais en direction opposée.

2. Dispositif de sécurité selon la revendication 1, **caractérisé en ce que** les barrières optiques de sécurité (130, 134, 138, 148, 156) forment au moins trois bandes d'un seul tenant de barrières optiques de sécurité, dans lequel une première bande (128) comportant des premières barrières optiques de sécurité (130) et une deuxième bande (132) comportant des deuxièmes barrières optiques de sécurité (134) sont disposées de manière sensiblement parallèle l'une à l'autre et une troisième bande (136) comportant des troisièmes barrières optiques de sécurité (138) se situe entre les première et les deuxième bandes (128, 132), dans lequel les première et deuxième bandes (128, 132) sont chacune placées sensiblement parallèlement au plan de mouvement (34) et la troisième bande (136) est placée sensiblement perpendiculairement au plan de mouvement (34).

3. Dispositif de sécurité selon la revendication 2, **caractérisé en ce que** la troisième bande (136) forme au moins en partie un bord supérieur du champ de protection (124).

4. Dispositif de sécurité selon la revendication 2 ou 3, **caractérisé en ce que** les première et deuxième bandes (128, 132) comprennent chacune une extrémité supérieure, dans lequel l'extrémité supérieure de la première bande (128) fait saillie par rapport à la troisième bande (136), et dans lequel l'extrémité supérieure de la deuxième bande (132) forme une surface plane avec la troisième bande (136).

5. Dispositif de sécurité selon l'une quelconque des revendications 2 à 4, **caractérisé en ce que** la première bande (128) définit un premier bord latéral du champ de protection (124), dans lequel la première bande (128) présente un espacement défini par rapport au plan de mouvement (34).

6. Dispositif de sécurité selon l'une quelconque des revendications 2 à 5, **caractérisé en ce que** la deuxième bande (132) est disposée approximativement dans le plan de mouvement (34).

7. Dispositif de sécurité selon l'une quelconque des revendications 2 à 6, **caractérisé en ce que** le champ de protection (124) est fixé aux deux côtés du plan de mouvement (34), dans lequel la première bande (128) et la deuxième bande (132) sont situées sur des côtés différents du plan de mouvement (34).

8. Dispositif de sécurité selon l'une quelconque des revendications 2 à 7, **caractérisé par** une quatrième barrière optique (148) qui définit avec la troisième bande (136) un deuxième bord latéral du champ de protection (124).

9. Dispositif de sécurité selon l'une quelconque des revendications 2 à 8, **caractérisé en ce que** les première et deuxième bandes (128, 132) comprennent chacune une extrémité inférieure, dans lequel une cinquième barrière optique (156) qui définit un bord inférieur du champ de protection (124) avec les deux extrémités inférieure est disposée entre les deux extrémités inférieures.

10. Dispositif de sécurité selon l'une quelconque des revendications 1 à 9, **caractérisé en ce que** la machine (10) présente une surcourse, dans lequel le nombre des barrières optiques de sécurité (130, 134, 138, 148, 156) peut être configuré en fonction de la longueur de la surcourse.

11. Dispositif de sécurité selon l'une quelconque des revendications 1 à 10, **caractérisé en ce qu'**une barrière optique de mesure supplémentaire (162) est disposée entre la première partie de machine (14, 18, 20) et le champ de protection (124).

12. Dispositif de sécurité selon l'une quelconque des revendications 1 à 11, **caractérisé en ce que** les barrières optiques de sécurité (130, 134, 138, 148, 156) ont chacune une section transversale rectangulaire, et présentent plus particulièrement une forme quadrangulaire.
